# EUROPEAN PATENT SPECIFICATION

(11) **EP 1 790 685 B1**
(45) Date of publication and mention of the grant of the patent: **03.02.2016**
(21) Application number: 06023425.9
(22) Date of filing: 10.11.2006
(51) Int. Cl.: C08K 7/02, C08J 5/00

(54) **Thermoplastic resin composition comprising carbon nanofibers**
Thermoplastische Harzzusammensetzung beinhaltend Kohlenstoffnanofaser
Matériau thermoplastique composite comprenant des nanofibres de carbone

(30) Priority: 11.11.2005 JP 2005327403; 28.09.2006 JP 2006264280
(43) Date of publication of application: 30.05.2007
(73) Proprietor: Nissin Kogyo Co., Ltd., Ueda-shi, Nagano 386-8505 (JP)
(72) Inventor: Noguchi, Toru, Nagano 386-8505 (JP); Magario, Akira, Nagano 386-8505 (JP)
(74) Representative: Brown, David Leslie

(56) References cited:
- EP-A- 1 466 940
- EP-A- 1 500 677
- EP-A1- 1 367 097

## Description

### BACKGROUND OF THE INVENTION

The present invention relates to methods of producing a thermoplastic resin composition.

A composite material has been generally provided with physical properties corresponding to the application by combining a matrix material and reinforcing fibers or reinforcing particles. In particular, in the fields of semiconductor manufacturing instruments, optical instruments, microfabrication instruments, and the like, a reduction in the effects of the thermal expansion of parts has been demanded. Therefore, composite materials using various reinforcing fibers such as carbon fibers have been proposed (see WO00/64668, for example).

The inventors of the invention have proposed a carbon fiber composite material in which carbon nanofibers are uniformly dispersed in an elastomer (see JP-A-2005-68386, for example). In such a carbon fiber composite material, the dispersibility of the carbon nanofibers with strong aggregating properties is improved by mixing the elastomer with the carbon nanofibers.

However, technology of uniformly dispersing carbon nanofibers in a thermoplastic resin has not yet been established.

### SUMMARY

According to a first aspect of the invention, there is provided a method of producing a thermoplastic resin composition comprising:
(a) at a temperature of 0 to 50°C, mixing carbon nanofibers into an elastomer including an unsaturated bond or a group having affinity to the carbon nanofibers, and dispersing the carbon nanofibers by applying a shear force to obtain a composite elastomer; and
(b) mixing the composite elastomer and a thermoplastic resin, wherein the thermoplastic resin is selected from a polyolefin resin, a polystyrene resin, a polyvinyl chloride resin, a polyamide resin, a polyacrylate resin, a polyester resin and a polycarbonate resin.

According to a second aspect of the invention, there is provided a method of producing a thermoplastic resin composition comprising:
(c) mixing a thermoplastic resin and an elastomer including an unsaturated bond or a group having affinity to carbon nanofibers, wherein the thermoplastic resin is selected from a polyolefin resin, a polystyrene resin, a polyvinyl chloride resin, a polyamide resin, a polyacrylate resin, a polyester resin and a polycarbonate resin; and
(d) mixing carbon nanofibers into the mixture of the thermoplastic resin and the elastomer at 100°C or less and at temperatures lower than mixing temperature in the step (c), and dispersing the carbon nanofibers by applying a shear force.

The methods of the present invention make available a thermoplastic resin composition comprising:
a matrix including a thermoplastic resin and an elastomer; and
carbon nanofibers dispersed in the matrix,
wherein the elastomer includes an unsaturated bond or a group having affinity to the carbon nanofibers.

### BRIEF DESCRIPTION OF THE SEVERAL VIEWS OF THE DRAWING

FIG. 1 is a view schematically showing a method of mixing an elastomer and carbon nanofibers utilizing an open-roll method according to one embodiment of the invention.
FIG. 2 is a schematic enlarged view showing part of a composite elastomer obtained by a method according to one embodiment of the invention.

### DETAILED DESCRIPTION OF THE EMBODIMENT

The invention provides a method of producing a thermoplastic resin composition in which carbon nanofibers are dispersed.

According to one embodiment of the invention, there is provided a method of producing a thermoplastic resin composition comprising:
(a) at a temperature of 0 to 50°C, mixing carbon nanofibers into an elastomer including an unsaturated bond or a group having affinity to the carbon nanofibers, and dispersing the carbon nanofibers by applying a shear force to obtain a composite elastomer; and
(b) mixing the composite elastomer and a thermoplastic resin, wherein the thermoplastic resin is selected from a polyolefin resin, a polystyrene resin, a polyvinyl chloride resin, a polyamide resin, a polyacrylate resin, a polyester resin and a polycarbonate resin.

According to the method of producing a thermoplastic resin composition of this embodiment, a thermoplastic resin composition in which the carbon nanofibers are uniformly dispersed can be easily obtained by mixing the composite elastomer, in which the carbon nanofibers are uniformly dispersed, with the thermoplastic resin.

According to one embodiment of the invention, there is provided a method of producing a thermoplastic resin composition comprising:
(c) mixing a thermoplastic resin and an elastomer including an unsaturated bond or a group having affinity to carbon nanofibers, wherein the thermoplastic resin is selected from a polyolefin resin, a polystyrene resin, a polyvinyl chloride resin, a polyamide resin, a polyacrylate resin, a polyester resin and a polycarbonate resin; and
(d) mixing carbon nanofibers into the mixture of the thermoplastic resin and the elastomer at 100°C or less and at temperatures lower than mixing temperature in the step (c), and dispersing the carbon nanofibers by applying a shear force.

According to the method of producing a thermoplastic resin composition of this embodiment, the thermoplastic resin can be provided with the elasticity of the elastomer by obtaining the mixture of the thermoplastic resin and the elastomer, and a thermoplastic resin composition in which the carbon nanofibers are uniformly dispersed can be easily obtained.

In the above methods of producing a thermoplastic resin composition, the carbon nanofibers may have an average diameter of 0.5 to 500 nm.

In the above methods of producing a thermoplastic resin composition, a network component of the elastomer in an uncrosslinked form may have a spin-spin relaxation time (T2n) measured at 30°C by the Hahn-echo method using a pulsed nuclear magnetic resonance (NMR) technique of 100 to 3,000 microseconds.

The methods of the present invention make available a thermoplastic resin composition comprising:
a matrix including a thermoplastic resin and an elastomer; and
carbon nanofibers dispersed in the matrix,
wherein the elastomer includes an unsaturated bond or a group having affinity to the carbon nanofibers.

In one embodiment of the thermoplastic resin composition made available by the methods of the present invention, the carbon nanofibers are uniformly dispersed in the matrix.

In one embodiment of the thermoplastic resin composition made available by the methods of the present invention, the elastomer may be a rubber elastomer or a thermoplastic elastomer. As the raw material elastomer, an uncrosslinked form is used when using a rubber elastomer.

Some embodiments of the invention are described below in detail with reference to the drawings.

As embodiments of the method of producing a thermoplastic resin composition of the invention, the following two methods can be given.
(1) A method of producing a thermoplastic resin composition according to one embodiment includes: (a) mixing carbon nanofibers into an elastomer including an unsaturated bond or a group having affinity to the carbon nanofibers, and dispersing the carbon nanofibers by applying a shear force to obtain a composite elastomer; and (b) mixing the composite elastomer and a thermoplastic resin.
(2) Another method of producing a thermoplastic resin composition according to another embodiment includes: (c) mixing a thermoplastic resin and an elastomer including an unsaturated bond or a group having affinity to carbon nanofibers; and (d) mixing carbon nanofibers into the mixture of the thermoplastic resin and the elastomer, and dispersing the carbon nanofibers by applying a shear force.

A thermoplastic resin composition according to these embodiments includes a matrix including a thermoplastic resin and an elastomer, and carbon nanofibers dispersed in the matrix, wherein the elastomer includes an unsaturated bond or a group having affinity to the carbon nanofibers.

The thermoplastic resin and the elastomer are described below.

As the thermoplastic resin, a thermoplastic resin which is generally used and exhibits excellent mutual solubility with the selected elastomer may be appropriately selected. The thermoplastic resin is selected from a polyolefin resin, a polystyrene resin, a polyvinyl chloride resin, a polyamide resin, a polyacrylate resin, a polyester resin and a polycarbonate resin.

In order to mix the carbon nanofibers into the matrix material and disperse the carbon nanofibers, the matrix material is required to exhibit polarity for ensuring adsorption on the carbon nanofibers, viscosity and flowability for entering the space between the aggregated carbon nanofibers, and elasticity for refining (disentangling) the carbon nanofibers due to strong shear force to uniformly disperse the carbon nanofibers. Therefore, it is preferable that the thermoplastic resin include a polar group. It is also preferable to use the elastomer as an elastic component in order to satisfy the above elasticity requirement.

As the elastomer, an elastomer which provides the thermoplastic resin with rubber elasticity and exhibits excellent mutual solubility with the selected thermoplastic resin may be appropriately selected. It is preferable that the elastomer include an unsaturated bond or a group having affinity to the carbon nanofibers. The elastomer has a molecular weight of preferably 5,000 to 5,000,000, and still more preferably 20,000 to 3,000,000. If the molecular weight of the elastomer is within this range, the elastomer molecules are entangled and linked, whereby the elastomer easily enters the space between the aggregated carbon nanofibers to exhibit an improved effect of separating the carbon nanofibers. If the molecular weight of the elastomer is less than 5,000, the elastomer molecules cannot be sufficiently entangled, whereby the effect of dispersing the carbon nanofibers is reduced, even if a shear force is applied in the subsequent step. If the molecular weight of the elastomer is greater than 5,000,000, the elastomer becomes too hard, whereby processing of the elastomer becomes difficult.

The network component of the elastomer in an uncrosslinked form has a spin-spin relaxation time (T2n/30°C), measured at 30°C by a Hahn-echo method using a pulsed nuclear magnetic resonance (NMR) technique, of preferably 100 to 3,000 microseconds, and still more preferably 200 to 1,000 microseconds. If the elastomer has a spin-spin relaxation time (T2n/30°C) within the above range, the elastomer is flexible and exhibits a sufficiently high molecular mobility. Therefore, when mixing the elastomer and the carbon nanofibers, the elastomer can easily enter the space between the carbon nanofibers due to high molecular mobility. If the spin-spin relaxation time (T2n/30°C) is shorter than 100 microseconds, the elastomer cannot exhibit a sufficient molecular mobility. If the spin-spin relaxation time (T2n/30°C) is longer than 3,000 microseconds, the elastomer tends to flow as a liquid, whereby it becomes difficult to disperse the carbon nanofibers.

The network component of the elastomer in a crosslinked form preferably has a spin-spin relaxation time (T2n) measured at 30°C by the Hahn-echo method using the pulsed NMR technique of 100 to 2,000 microseconds. The reasons therefor are the same as those described for the uncrosslinked form. Specifically, when crosslinking the uncrosslinked form satisfying the above conditions, the spin-spin relaxation time (T2n) of the resulting crosslinked form almost falls within the above range.

The spin-spin relaxation time obtained by the Hahn-echo method using the pulsed NMR technique is a measure which indicates the molecular mobility of a substance. In more detail, when measuring the spin-spin relaxation time of the elastomer by the Hahn-echo method using the pulsed NMR technique, a first component having a shorter first spin-spin relaxation time (T2n) and a second component having a longer second spin-spin relaxation time (T2nn) are detected. The first component corresponds to the network component (backbone molecule) of the polymer, and the second component corresponds to the non-network component (branched component such as terminal chain) of the polymer. The shorter the first spin-spin relaxation time, the lower the molecular mobility and the harder the elastomer. The longer the first spin-spin relaxation time, the higher the molecular mobility and the softer the elastomer.

As the measurement method in the pulsed NMR technique, a solid-echo method, a Carr-Purcell-Meiboom-Gill (CPMG) method, or a 90-degree pulse method may be applied instead of the Hahn-echo method. Since the elastomer according to the embodiments has a medium spin-spin relaxation time (T2), the Hahn-echo method is most suitable. In general, the solid-echo method and the 90-degree pulse method are suitable for measuring a short spin-spin relaxation time (T2), the Hahn-echo method is suitable for measuring a medium spin-spin relaxation time (T2), and the CPMG method is suitable for measuring a long spin-spin relaxation time (T2).

At least one of the main chain, side chain, and terminal chain of the elastomer includes an unsaturated bond or a group having affinity to the carbon nanofiber, particularly to a terminal radical of the carbon nanofiber, or the elastomer has properties of readily producing such a radical or group. The unsaturated bond or group may be at least one unsaturated bond or group selected from a double bond, a triple bond, and functional groups such as alpha-hydrogen, a carbonyl group, a carboxyl group, a hydroxyl group, an amino group, a nitrile group, a ketone group, an amide group, an epoxy group, an ester group, a vinyl group, a halogen group, a urethane group, a biuret group, an allophanate group, and a urea group.

The carbon nanofiber generally has a structure in which the side surface is formed of a six-membered ring of carbon atoms and the end is closed by introduction of a five-membered ring. However, since the carbon nanofiber has a forced structure, a defect tends to occur, so that a radical or a functional group tends to be formed at the defect. In the embodiments, since at least one of the main chain, side chain, and terminal chain of the elastomer includes an unsaturated bond or a group having high affinity (reactivity or polarity) to the radical of the carbon nanofiber, the elastomer and the carbon nanofiber can be bonded. This enables the carbon nanofibers to be easily dispersed by overcoming the aggregating force of the carbon nanofibers. When mixing the elastomer and the carbon nanofibers, free radicals produced due to breakage of the elastomer molecules attack the defects of the carbon nanofibers to produce free radicals on the surfaces of the carbon nanofibers.

As the elastomer, an elastomer such as natural rubber (NR), epoxidized natural rubber (ENR), styrene-butadiene rubber (SBR), nitrile rubber (NBR), chloroprene rubber (CR), ethylene propylene rubber (EPR or EPDM), butyl rubber (IIR), chlorobutyl rubber (CIIR), acrylic rubber (ACM), silicone rubber (Q), fluorine rubber (FKM), butadiene rubber (BR), epoxidized butadiene rubber (EBR), epichlorohydrin rubber (CO or CEO), urethane rubber (U), or polysulfide rubber (T); a thermoplastic elastomer such as an olefin-based elastomer (TPO), poly(vinyl chloride)-based elastomer (TPVC), polyester-based elastomer (TPEE), polyurethane-based elastomer (TPU), polyamide-based elastomer (TPEA), or styrene-based elastomer (SBS); or a mixture of these elastomers may be used. In particular, a highly polar elastomer which readily produces free radicals during mixing of the elastomer, such as natural rubber (NR) or nitrile rubber (NBR), is preferable. An elastomer having a low polarity, such as ethylene propylene rubber (EPDM), may also be used in the embodiments, since such an elastomer also produces free radicals by setting the mixing temperature at a relatively high temperature (e.g. 50 to 150°C for EPDM).

The elastomer according to the embodiments may be a rubber elastomer or a thermoplastic elastomer. When using a rubber elastomer, an uncrosslinked elastomer is preferably used.

The carbon nanofibers are described below.

The carbon nanofibers preferably have an average diameter of 0.5 to 500 nm. In order to increase the strength of the thermoplastic resin composition, the average diameter of the carbon nanofibers is still more preferably 0.5 to 30 nm.

The aspect ratio of the carbon nanofibers is preferably 50 or more, and still more preferably 100 to 20,000.

As examples of the carbon nanofiber, a carbon nanotube and the like can be given. The carbon nanotube has a single-wall structure in which a graphene sheet of a hexagonal carbon layer is closed in the shape of a cylinder, or a multiwall structure in which the cylindrical structures are nested. Specifically, the carbon nanotube may be formed only of either the single-wall structure or the multi-layer structure, or may have the single-wall structure and the multiwall structure in combination. A carbon material having a partial carbon nanotube structure may also be used. The carbon nanotube may also be called a graphite fibril nanotube.

A single-wall carbon nanotube or a multiwall carbon nanotube is produced to a desired size using an arc discharge method, laser ablation method, vapor-phase growth method, or the like.

In the arc discharge method, an arc is discharged between electrode materials made of carbon rods in an argon or hydrogen atmosphere at a pressure lower than atmospheric pressure to a small extent to obtain a multiwall carbon nanotube deposited on the cathode. When a catalyst such as nickel/cobalt is mixed into the carbon rod and an arc is discharged, a single-wall carbon nanotube is obtained from soot adhering to the inner side surface of the processing vessel.

In the laser ablation method, a target carbon surface into which a catalyst such as nickel/cobalt is mixed is irradiated with strong pulse laser light from a YAG laser in a noble gas (e.g. argon) to melt and vaporize the carbon surface to obtain a single-wall carbon nanotube.

In the vapor-phase growth method, a carbon nanotube is synthesized by thermally decomposing a hydrocarbon such as benzene or toluene in a vapor phase. As specific examples of the vapor-phase growth method, a floating catalyst method, zeolite-supported catalyst method, and the like can be given.

The carbon nanofibers may be provided with improved adhesion to and wettability with the elastomer by subjecting the carbon nanofibers to a surface treatment such as an ion-injection treatment, sputter-etching treatment, or plasma treatment before mixing the carbon nanofibers into the elastomer.

The method (1) of producing a thermoplastic resin composition is described below.

The step (a) of mixing the carbon nanofibers into the elastomer and dispersing the carbon nanofibers by applying a shear force to obtain a composite elastomer is described below.

The step (a) may be carried out by using an open-roll method, an internal mixing method, a multi-screw extrusion kneading method, or the like.

In this embodiment, an example using a open-roll method with a roll distance of 0.5 mm or less is described as the step (a).

FIG. 1 is a diagram schematically showing the open-roll method using two rolls. In FIG. 1, a reference numeral 10 indicates a first roll, and a reference numeral 20 indicates a second roll. The first roll 10 and the second roll 20 are disposed at a predetermined distance d (e.g. 1.5 mm). The first and second rolls are rotated normally or reversely. In the example shown in FIG. 1, the first roll 10 and the second roll 20 are rotated in the directions indicated by the arrows.

When causing an elastomer 30 to be wound around the second roll 20 while rotating the first and second rolls 10 and 20, a bank 32 of the elastomer 30 is formed between the rolls 10 and 20. After the addition of carbon nanofibers 40 to the bank 32, the first and second rolls 10 and 20 are rotated to obtain a mixture of the elastomer and the carbon nanofibers. The mixture is then removed from the open rolls. After setting the distance d between the first roll 10 and the second roll 20 at preferably 0.5 mm or less, and still more preferably 0.1 to 0.5 mm, the mixture of the elastomer and the carbon nanofibers is supplied to the open rolls and tight-milled to obtain a composite elastomer. Tight milling is preferably performed five to ten times, for example. When the surface velocity of the first roll 10 is indicated by V1 and the surface velocity of the second roll 20 is indicated by V2, the surface velocity ratio (V1/V2) of the first roll 10 to the second roll 20 during tight milling is preferably 1.05 to 3.00, and still more preferably 1.05 to 1.2. A desired shear force can be obtained by using such a surface velocity ratio.

This causes a high shear force to be applied to the elastomer 30 so that the aggregated carbon nanofibers 40 are separated in such a manner that the carbon nanofibers 40 are removed by the elastomer molecules one by one and are dispersed in the elastomer 30.

In this step, the elastomer and the carbon nanofibers are mixed at a relatively low temperature of 0 to 50°C, and still more preferably 5 to 30°C in order to obtain as high a shear force as possible. When using EPDM as the elastomer, it is preferable to perform two-stage mixing steps. In the first mixing step, EPDM and the carbon nanofibers are mixed at a first temperature which is 50 to 100°C lower than the temperature in the second mixing step in order to obtain as high a shear force as possible. The first temperature is 0 to 50°C, and still more preferably 5 to 30°C. A second temperature of the rolls is set at a relatively high temperature of 50 to 150°C so that the dispersibility of the carbon nanofibers can be improved.

In this step, free radicals are produced in the elastomer shorn by the shear force and attack the surfaces of the carbon nanofibers, whereby the surfaces of the carbon nanofibers are activated. When using natural rubber (NR) as the elastomer, the natural rubber (NR) molecule is cut while being mixed by the rolls to have a molecular weight lower than the molecular weight before being supplied to the open rolls. Radicals are produced in the cut natural rubber (NR) molecules and attack the surfaces of the carbon nanofibers during mixing, whereby the surfaces of the carbon nanofibers are activated.

Since the elastomer according to this embodiment has the above-described characteristics, specifically, the above-described molecular configuration (molecular length), molecular motion, and chemical interaction with the carbon nanofibers, dispersion of the carbon nanofibers is facilitated. Therefore, a composite elastomer exhibiting excellent dispersibility and dispersion stability (dispersed carbon nanofibers rarely reaggregate) of the carbon nanofibers can be obtained. In more detail, when mixing the elastomer and the carbon nanofibers, the elastomer having an appropriately long molecular length and a high molecular mobility enters the space between the carbon nanofibers, and a specific portion of the elastomer bonds to a highly active site of the carbon nanofiber through chemical interaction. When a high shear force is applied to the mixture of the elastomer and the carbon nanofibers in this state, the carbon nanofibers move accompanying the movement of the elastomer, whereby the aggregated carbon nanofibers are separated and dispersed in the elastomer. The dispersed carbon nanofibers are prevented from reaggregating due to chemical interaction with the elastomer, whereby excellent dispersion stability can be obtained.

In the step (a), the above-mentioned internal mixing method or multi-screw extrusion kneading method may be used instead of the open-roll method. In other words, it suffices that this step apply a shear force to the elastomer sufficient to separate the aggregated carbon nanofibers and produce radicals by cutting the elastomer molecules.

In the step (a) of dispersing the carbon nanofibers in the elastomer, or in the subsequent step, a compounding ingredient usually used in the processing of an elastomer such as rubber may be added. As the compounding ingredient, a known compounding ingredient may be used. It is preferable that the composite elastomer be uncrosslinked. A crosslinking agent may be mixed into the composite elastomer and crosslinked in the step (b) in order to improve collapse resistance and creep properties depending on the product application, for example.

The composite elastomer obtained by the step (a) is described below.

FIG. 2 is a schematic enlarged view showing part of the composite elastomer according to this embodiment. In a composite elastomer 50, the carbon nanofibers 40 are uniformly dispersed in the elastomer 30 as the matrix. In other words, the elastomer 30 is restrained by the carbon nanofibers 40. In this state, the mobility of the elastomer molecules restrained by the carbon nanofibers is low in comparison with the case where the elastomer molecules are not restrained by the carbon nanofibers.

The composite elastomer according to this embodiment preferably includes the elastomer and 8 to 50 wt% of the carbon nanofibers dispersed in the elastomer. If the amount of carbon nanofibers in the composite elastomer is less than 8 wt%, the amount of carbon nanofibers in the thermoplastic resin composition is decreased, whereby a sufficient effect may not be obtained. If the amount of carbon nanofibers in the composite elastomer exceeds 50 wt%, processing in the step (a) becomes difficult.

The composite elastomer may include or may not include a crosslinking agent depending on the application. When the composite elastomer does not include a crosslinking agent, since the matrix is not crosslinked when forming the thermoplastic resin composition, the matrix can be recycled.

In the composite elastomer according to this embodiment, the carbon nanofibers are uniformly dispersed in the elastomer as the matrix. In other words, the elastomer is restrained by the carbon nanofibers. In this state, the mobility of the elastomer molecules restrained by the carbon nanofibers is low in comparison with the case where the elastomer molecules are not restrained by the carbon nanofibers. Therefore, the first spin-spin relaxation time (T2n), the second spin-spin relaxation time (T2nn), and the spin-lattice relaxation time (T1) of the composite elastomer according to this embodiment are shorter than those of the elastomer which does not include the carbon nanofibers.

In a state in which the elastomer molecules are restrained by the carbon nanofibers, the number of non-network components (non-reticulate chain components) is considered to be reduced for the following reasons. Specifically, when the molecular mobility of the elastomer is entirely decreased by the carbon nanofibers, since the number of non-network components which cannot easily move is increased, the non-network components tend to behave in the same manner as the network components. Moreover, since the non-network components (terminal chains) easily move, the non-network components tend to be adsorbed on the active sites of the carbon nanofibers. It is considered that these phenomena decrease the number of non-network components. Therefore, the fraction (fnn) of components having the second spin-spin relaxation time is smaller than that of the elastomer which does not include the carbon nanofibers.

Therefore, the composite elastomer according to this embodiment preferably has values measured by the Hahn-echo method using the pulsed NMR technique within the following range.

Specifically, it is preferable that, in the uncrosslinked composite elastomer, the first spin-spin relaxation time (T2n) measured at 150°C be 100 to 3,000 microseconds, the second spin-spin relaxation time (T2nn) measured at 150°C be 1,000 to 10,000 microseconds, and the fraction (fnn) of components having the second spin-spin relaxation time be less than 0.2.

It is preferable that, in the crosslinked composite elastomer, the first spin-spin relaxation time (T2n) measured at 150°C be 100 to 2,000 microseconds, the second spin-spin relaxation time (T2nn) measured at 150°C be absent or 1,000 to 5,000 microseconds, and the fraction (fnn) of components having the second spin-spin relaxation time be less than 0.2.

The spin-lattice relaxation time (T1) measured by the inversion recovery method using the pulsed NMR technique is a measure indicating the molecular mobility of a substance together with the spin-spin relaxation time (T2). In more detail, the shorter the spin-lattice relaxation time of the elastomer, the lower the molecular mobility and the harder the elastomer. The longer the spin-lattice relaxation time of the elastomer, the higher the molecular mobility and the softer the elastomer. Therefore, the composite elastomer in which the carbon nanofibers are uniformly dispersed exhibits low molecular mobility which falls within the above T2n, T2nn, and fun ranges.

The composite elastomer according to this embodiment preferably has a flow temperature, determined by temperature dependence measurement of dynamic viscoelasticity, 20°C or more higher than the flow temperature of the raw material elastomer. In the composite elastomer according to this embodiment, the carbon nanofibers are uniformly dispersed in the elastomer. In other words, the elastomer is restrained by the carbon nanofibers, as described above. In this state, the elastomer exhibits molecular motion smaller than that of an elastomer which does not include the carbon nanofibers, whereby flowability is decreased.

The step (b) of mixing the composite elastomer and the thermoplastic resin is described below.

The step (b) may be carried out by using the open-roll method, the internal mixing method, the multi-screw extrusion kneading method, or the like in the same manner as the step (a). For example, when carrying out the step (b) by the multi-screw extrusion kneading method using a twin-screw extruder, the thermoplastic resin and the composite elastomer are supplied to the twin-screw extruder, and melted and mixed. The composite elastomer is dispersed in the thermoplastic resin by rotating the screws of the twin-screw extruder. A thermoplastic resin composition is extruded from the twin-screw extruder. When carrying out the step (b) using the open-roll method, the thermoplastic resin is wound around the roll heated to a specific temperature at which the thermoplastic resin softens. After the addition of the composite elastomer obtained in the step (a) to the thermoplastic resin, the thermoplastic resin and the composite elastomer are mixed. Since the composite elastomer is dispersed in the thermoplastic resin by the step (b), the carbon nanofibers are also dispersed in the thermoplastic resin. Moreover, since the thermoplastic resin exhibits polarity and viscosity and the elastomer exhibits elasticity, the carbon nanofibers can be uniformly dispersed in the matrix. A crosslinking agent may be added to the twin-screw extruder in the step (b), or a crosslinking agent may be added in advance in the step (a), and the composite elastomer may be crosslinked. The thermoplastic resin composition thus obtained may be thermally press-molded in a metal mold having a desired shape, for example.

As the elastomer used in the step (a), an appropriate elastomer which exhibits excellent mutual solubility with the thermoplastic resin used in the step (b) is preferably selected. For example, when the thermoplastic resin is polypropylene, the elastomer is preferably EPDM. When the thermoplastic resin is polystyrene, the elastomer is preferably SBR or SBS. When the thermoplastic resin is nylon, the elastomer is preferably NBR or TPU.

The amount of composite elastomer in the thermoplastic resin composition is preferably 2 wt% to 50 wt%, and still more preferably 10 wt% to 45 wt%. The amount of carbon nanofibers in the thermoplastic resin composition is preferably 0.3 wt% to 25 wt%, and still more preferably 3 wt% to 15 wt%. If the amount of composite elastomer in the thermoplastic resin composition is less than 2 wt%, the amount of carbon nanofibers in the thermoplastic resin composition is decreased, whereby a sufficient effect may not be obtained. If the amount of composite elastomer in the thermoplastic resin composition exceeds 50 wt%, the processing in the step (b) becomes difficult.

The method (2) of producing a thermoplastic resin composition is described below.

The step (c) of mixing the thermoplastic resin and the elastomer and the step (d) of mixing the carbon nanofibers into the mixture of the thermoplastic resin and the elastomer and dispersing the carbon nanofibers by applying a shear force are described below.

The step (c) may be carried out using the open-roll method using a resin roll, the internal mixing method, the multi-screw extrusion kneading method, or the like. For example, when carrying out the step (c) by the multi-screw extrusion kneading method using a twin-screw extruder, the thermoplastic resin and the elastomer are supplied to the twin-screw extruder, and melted and mixed. The elastomer is dispersed in the thermoplastic resin by rotating the screws of the twin-screw extruder. When carrying out the step (c) using the open-roll method, the thermoplastic resin is wound around the roll heated to a specific temperature at which the thermoplastic resin softens. After the addition of the elastomer to the thermoplastic resin, the thermoplastic resin and the elastomer are mixed.

In the step (d), the carbon nanofibers are supplied to and mixed with the mixture of the thermoplastic resin and the elastomer which are melted in the twin-screw extruder. The carbon nanofibers are mixed at a temperature lower than that of the step (c), whereby a high shear force is applied to the mixture by rotating the screws of the twin-screw extruder. As a result, the aggregated carbon nanofibers are separated so that the carbon nanofibers are pulled one by one by the elastomer molecules in the mixture, and dispersed in the mixture. A thermoplastic resin composition in which the carbon nanofibers are dispersed is extruded from the twin-screw extruder. A crosslinking agent may be added to the twin-screw extruder in the step (c) or (d), and the composite elastomer in the thermoplastic resin composition may be crosslinked. The step (d) may also be carried out using the open-roll method or the internal mixing method in addition to the multi-screw extrusion kneading method. For example, when carrying out the step (d) using the open-roll method, the mixture of the thermoplastic resin and the elastomer is wound around the roll heated to a specific temperature at which the thermoplastic resin softens. After the addition of the carbon nanofibers to the mixture, the carbon nanofibers are dispersed in the mixture to obtain a thermoplastic resin composition. In particular, the elastomer can exhibit elasticity by setting the roll temperature at the temperature 100°C or less and lower than that of the step (c) after supplying the carbon nanofibers, whereby the carbon nanofibers can be dispersed in the matrix. The thermoplastic resin composition thus obtained may be thermally press-molded in a metal mold having a desired shape, for example.

As the elastomer used in the steps (c) and (d), an appropriate elastomer which exhibits excellent mutual solubility with the thermoplastic resin is preferably selected in the same manner as in the steps (a) and (b). For example, when the thermoplastic resin is polypropylene, the elastomer is preferably EPDM. When the thermoplastic resin is polystyrene or an acrylic resin, the elastomer is preferably SBR or SBS. When the thermoplastic resin is nylon, the elastomer is preferably NBR or TPU.

The amount of elastomer in the thermoplastic resin composition is preferably 50 wt% or less, and still more preferably 5 wt% to 30 wt%. The amount of carbon nanofibers in the thermoplastic resin composition is preferably 0.3 wt% to 25 wt%, and still more preferably 3 wt% to 15 wt%.

The thermoplastic resin composition is described below.

The thermoplastic resin composition according to these embodiments includes the matrix including the thermoplastic resin and the elastomer, and the carbon nanofibers dispersed in the matrix, the elastomer including an unsaturated bond or a group having affinity to the carbon nanofibers.

The thermoplastic resin composition exhibits improved strength, rigidity, durability, softening temperature (maximum use temperature), and the like in comparison with the thermoplastic resin, since the carbon nanofibers are uniformly dispersed in the matrix. The thermoplastic resin composition exhibits improved impact resistance due to incorporation of the elastomer component.

Examples according to the invention and comparative examples are described below. Note that the invention is not limited to the following examples.

### (1) Preparation of samples of Examples 1 to 6

### Step (a):

An elastomer in an amount shown in Table 1 was supplied to a 6-inch open roll (roll temperature: 10 to 50°C) and wound around the rolls set at a roll distance of 1 mm. Carbon nanofibers were then supplied to and mixed with the elastomer. After reducing the role distance to 0.1 mm, the mixture was tight-milled five times to obtain a composite elastomer in which the carbon nanofibers were dispersed in the elastomer. The roll rotational speed was set at 22 rpm/20 rpm.

### Step (b):

The composite elastomer was wound around a six-inch open roll with heated rolls. A thermoplastic resin in an amount shown in Table 1 was then supplied to and mixed with the composite elastomer, and the resulting thermoplastic resin composition was formed into a sheet with a thickness of 1.2 mm. The temperature of the heated rolls was set at 180°C in Examples 1, 2, 5, and 6, and was set at 160°C in Examples 3 and 4. The roll rotational speed was set at 22 rpm/20 rpm, and the roll distance was set at 1 mm. The sheet-shaped thermoplastic resin composition was removed from the open roll and placed in a metal mold with a thickness of 1 mm. The thermoplastic resin composition was thermally press-molded to obtain a thermoplastic resin composition sample. The thermal press-molding temperature was set corresponding to the molding temperature of the thermoplastic resin. The press-molding temperature was 220°C in Examples 1 and 2, 200°C in Examples 3 and 4, and 300°C in Examples 5 and 6.

### (2) Preparation of samples of Examples 7 to 12

### Step (c):

A thermoplastic resin shown in Table 2 was supplied to heated rolls of a six-inch open roll and wound around the heated roll. The elastomer shown in Table 2 was then supplied to and mixed with the thermoplastic resin to obtain a mixture of the elastomer and the thermoplastic resin. The temperature of the heated rolls was set at 180°C in Examples 7, 8, 11, and 12, and was set at 160°C in Examples 9 and 10 corresponding to the softening temperature of the thermoplastic resin. The roll distance was set at 1 mm, and the roll rotational speed was set at 22 rpm/20 rpm.

### Step (d):

Carbon nanofibers were supplied to and mixed with the resulting mixture. After setting the heated roll temperature at 100°C and reducing the roll distance to 0.1 mm, the mixture was tight-milled five times, and the resulting thermoplastic resin composition was formed into a sheet with a thickness of 1.2 mm. The roll rotational speed was set at 22 rpm/20 rpm. The sheet-shaped thermoplastic resin composition was removed from the open roll and placed in a metal mold with a thickness of 1 mm. The thermoplastic resin composition was thermally press-molded to obtain a thermoplastic resin composition sample. The thermal press-molding temperature was set corresponding to the thermoplastic resin. The press-molding temperature was 220°C in Examples 7 and 8, 200°C in Examples 9 and 10, and 300°C in Examples 11 and 12.

The types and amounts (phr) of the elastomer, the thermoplastic resin, and the carbon nanofibers are shown in Tables 1 and 2. In Tables 1 to 3, "epoxidized urethane" is a urethane thermoplastic elastomer into which an epoxy group is introduced, "epoxidized SBS" is an epoxidized styrene-butadiene block copolymer manufactured by Daicel Chemical Industries, Ltd. (Epofriend A1005 (molecular weight 100,000, epoxidation rate: 1.7%)), "EPDM" is an ethylene propylene rubber, "nylon" is Nylon 3014U manufactured by Ube Industries, Ltd., "polypropylene" is Novatec PPMA1B manufactured by Japan Polypropylene Corporation, and "acrylic resin" is Sumipex LG35 manufactured by Sumitomo Chemical Industries Co., Ltd. In Tables 1 and 2, "CNF" is a carbon nanofiber, and "MWNT" is a multi-wall carbon nanotube (CVD) with an average diameter of 13 nm (manufactured by ILJIN Nanotech Co., Ltd.). In Table 1, the "weight ratio of elastomer and CNF (wt%)" is the content of the elastomer and CNF in the thermoplastic resin composition.

### (3) Preparation of samples of Comparative Examples 1 to 3

A thermoplastic resin shown in Table 3 was supplied to a heated roll of a six-inch open roll and wound around the heated roll. After mixing the thermoplastic resin, the resulting thermoplastic resin was formed into a sheet with a thickness of 1.2 mm. The temperature of the heated rolls during mixing was set at 180°C in Comparative Example 1, at 160°C in Comparative Example 2, and at 250°C in Comparative Example 3. The temperature of the heated roll during sheeting was set at 180°C in Comparative Example 1, at 160°C in Comparative Example 2, and at 200°C in Comparative Example 3. The roll distance was set at 1 mm, and the roll rotational speed was set at 22 rpm/20 rpm. The sheet-shaped thermoplastic resin was removed from the open roll and placed in a metal mold with a thickness of 1 mm. The thermoplastic resin was thermally press-molded to obtain a thermoplastic resin sample. The thermal press-molding temperature was set at 220°C in Comparative Example 1, at 200°C in Comparative Example 2, and at 300°C in Comparative Example 3.

### (4) Measurement using pulsed NMR technique

The composite elastomers obtained in the step (a) of Examples 1 to 6 were subjected to measurement by the Hahn-echo method using the pulsed NMR technique. The measurement was conducted using a "JMN-MU25" manufactured by JEOL, Ltd. The measurement was conducted under conditions of an observing nucleus of ¹H, a resonance frequency of 25 MHz, and a 90-degree pulse width of 2 microseconds. A decay curve was determined while changing Pi in the pulse sequence (90°x-Pi-180°x) of the Hahn-echo method. The sample was measured in a state in which the sample was inserted into a sample tube within an appropriate magnetic field range. The measurement temperature was 150°C. The first spin-spin relaxation time (T2n) of the composite elastomer was measured by this measurement. The measurement results are shown in Table 1.

### (5) Measurement of tensile strength (MPa)

A specimen prepared by cutting each sample in the shape of a 1A dumbbell was subjected to a tensile test in accordance with JIS K7161 at a temperature of 23±2°C and a tensile rate of 500 mm/min using a tensile tester manufactured by Toyo Seiki Seisaku-sho, Ltd. to measure the tensile strength (MPa). The results are shown in Tables 1 to 3.

### (6) Measurement of elongation at yield (%)

A specimen prepared by cutting each sample in the shape of a dumbbell in accordance with JIS-K6251-1993 was subjected to a tensile fracture test using a tensile tester manufactured by Toyo Seiki Seisaku-sho, Ltd. at a temperature of 23±2°C and a tensile rate of 500 mm/min to measure the elongation at yield (%). The results are shown in Tables 1 to 3.

### (7) Measurement of modulus of elasticity (GPa)

A specimen prepared by cutting each sample in the shape of a strip (40×1×5 (width) mm) was subjected to a dynamic viscoelasticity test using a dynamic viscoelasticity tester DMS6100 manufactured by SII at a chuck distance of 20 mm, a temperature of 30°C, a dynamic strain of ±0.05, and a frequency of 10 Hz to measure the dynamic modulus of elasticity (E') at 30°C. The results are shown in Tables 1 to 3.

### (8) Measurement of softening temperature under load

A specimen prepared by cutting each sample in the shape of a strip (20 (length) × 1 (thickness) × 2 (width) mm) was heated from 25°C using a thermomechanical analyzer (TMA) at a chuck distance of 10 mm and a load of 450 KPa, and the temperature at which deformation occurred was measured as the softening temperature under load (maximum use temperature). The results are shown in Tables 1 to 3.

**TABLE 1**

| | | Example 1 | Example 2 | Example 3 | Example 4 | Example 5 | Example 6 |
|---|---|---|---|---|---|---|---|
| Type of material | Elastomer | Epoxidized urethane | Epoxidized urethane | EPDM | EPDM | Epoxidized SBS | Epoxidized SBS |
| | Thermoplastic resin | Nylon | Nylon | Polypropylene | Polypropylene | Acrylic resin | Acrylic resin |
| | CNF | MWNT | MWNT | MWNT | MWNT | MWNT | MWNT |
| Amount | Elastomer (phr) | 100 | 100 | 100 | 100 | 100 | 100 |
| | CNF (phr) | 40 | 40 | 40 | 40 | 40 | 40 |
| | Thermoplastic resin (phr) | 200 | 1000 | 200 | 1000 | 200 | 1000 |
| Weight ratio of elastomer and CNF | Elastomer (wt%) | 29.4 | 8.8 | 29.4 | 8.8 | 29.4 | 8.8 |
| | CNF (wt%) | 11.8 | 3.5 | 11.8 | 3.5 | 11.8 | 3.5 |
| Properties of thermoplastic resin composition | T2n of composite elastomer (150°C) (microsecond) | 480 | 480 | 1210 | 1210 | 1400 | 1400 |
| | Tensile strength (MPa) | 95 | 100 | 55 | 60 | 85 | 90 |
| | Elongation at yield (%) | 16 | 15 | 35 | 30 | 9 | 8 |
| | Modulus of elasticity (GPa) | 15 | 22 | 2 | 2.5 | 10 | 12 |
| | Softening temperature under load (maximum use temperature) (°C) | 175 | 190 | 145 | 160 | 150 | 160 |

**TABLE 2**

| | | Example 7 | Example 8 | Example 9 | Example 10 | Example 11 | Example 12 |
|---|---|---|---|---|---|---|---|
| Type of material | Elastomer | Epoxidized urethane | Epoxidized urethane | EPDM | EPDM | Epoxidized SBS | Epoxidized SBS |
| | Thermoplastic resin | Nylon | Nylon | Polypropylene | Polypropylene | Acrylic resin | Acrylic resin |
| | CNF | MWNT | MWNT | MWNT | MWNT | MWNT | MWNT |
| Amount | Elastomer (phr) | 100 | 100 | 100 | 100 | 100 | 100 |
| | CNF (phr) | 40 | 40 | 40 | 40 | 40 | 40 |
| | Thermoplastic resin (phr) | 200 | 1000 | 200 | 1000 | 200 | 1000 |
| Weight ratio of elastomer and CNF | Elastomer (wt%) | 29.4 | 8.8 | 29.4 | 8.8 | 29.4 | 8.8 |
| | CNF (wt%) | 11.8 | 3.5 | 11.8 | 3.5 | 11.8 | 3.5 |
| Properties of thermoplastic resin composition | Tensile strength (MPa) | 80 | 85 | 40 | 45 | 70 | 75 |
| | Elongation at yield (%) | 15 | 13 | 30 | 25 | 7 | 7 |
| | Modulus of elasticity (GPa) | 13 | 18 | 1.8 | 2.2 | 7 | 8 |
| | Softening temperature under load (maximum use temperature) (°C) | 165 | 170 | 140 | 150 | 125 | 130 |

**TABLE 3**

| | | Comparative Example 1 | Comparative Example 2 | Comparative Example 3 |
|---|---|---|---|---|
| Type of thermoplastic resin | | Nylon | Polypropylene | Acrylic resin |
| Properties of thermoplastic resin composition | Tensile strength (MPa) | 70 | 35 | 60 |
| | Elongation at yield (%) | 10 | 20 | 5 |
| | Modulus of elasticity (GPa) | 10 | 1.5 | 5 |
| | Softening temperature under load (maximum use temperature) (°C) | 145 | 100 | 100 |

As shown in Table 1, the first spin-spin relaxation time (T2n) of the composite elastomer was 480 to 1400 (microsecond). This indicates that the carbon nanofibers were uniformly dispersed in the composite elastomer. As shown in Tables 1 to 3, the compositions of Examples 1 to 12 using the carbon nanofibers (MWNT) exhibited a tensile strength, an elongation at yield, and a dynamic modulus of elasticity higher than those of the thermoplastic resins of Comparative Examples 1 to 3. In particular, it was confirmed that the compositions of Examples 1 to 12 containing the carbon nanofibers exhibited a softening temperature under load higher than those of the thermoplastic resins of Comparative Examples 1 to 3. According to Examples 1 to 12, the carbon nanofibers with high aggregating properties could be dispersed by utilizing the elasticity of the elastomer.

## Claims

1. A method of producing a thermoplastic resin composition comprising:
(a) at a temperature of 0 to 50°C, mixing carbon nanofibers into an elastomer including an unsaturated bond or a group having affinity to the carbon nanofibers, and dispersing the carbon nanofibers by applying a shear force to obtain a composite elastomer; and
(b) mixing the composite elastomer and a thermoplastic resin, wherein the thermoplastic resin is selected from a polyolefin resin, a polystyrene resin, a polyvinyl chloride resin, a polyamide resin, a polyacrylate resin, a polyester resin and a polycarbonate resin.

2. A method of producing a thermoplastic resin composition comprising:
(c) mixing a thermoplastic resin and an elastomer including an unsaturated bond or a group having affinity to carbon nanofibers, wherein the thermoplastic resin is selected from a polyolefin resin, a polystyrene resin, a polyvinyl chloride resin, a polyamide resin, a polyacrylate resin, a polyester resin and a polycarbonate resin; and
(d) mixing carbon nanofibers into the mixture of the thermoplastic resin and the elastomer at 100°C or less and at temperatures lower than mixing temperature in the step (c), and dispersing the carbon nanofibers by applying a shear force.

3. The method of producing a thermoplastic resin composition as defined in claim 1 or 2,
wherein the carbon nanofibers have an average diameter of 0.5 to 500nm.

4. The method of producing a thermoplastic resin composition as defined in any of claims 1 to 3,
wherein a network component of the elastomer in an uncrosslinked form has a spin-spin relaxation time (T2n) measured at 30°C by the Hahn-echo method under a condition of an observing nucleus of ¹H using a pulsed nuclear magnetic resonance (NMR) technique of 100 to 3,000 microseconds.

## Patentansprüche

1. Herstellungsverfahren für eine thermoplastische Harzzusammensetzung, umfassend
(a) bei einer Temperatur von 0 bis 50°C, Einmischen von Kohlenstoffnanofasern in ein Elastomer mit einer ungesättigten Bindung oder einer Gruppe mit einer Affinität für Kohlenstoffnanofasern, und Dispergieren der Kohlenstoffnanofasern durch Anwenden einer Scherkraft zum Erhalten eines Verbundelastomers; und
(b) Vermischen des Verbundelastomers und eines thermoplastischen Harzes, wobei das thermoplastische Harz ausgewählt ist aus einem Polyolefinharz, einem Polystyrolharz, einem Polyvinylchloridharz, einem Polyamidharz, einem Polyacrylatharz, einem Polyesterharz und einem Polycarbonatharz.

2. Herstellungsverfahren für eine thermoplastische Harzzusammensetzung, umfassend
(c) Vermischen eines thermoplastischen Harzes und eines Elastomers mit einer ungesättigten Bindung oder einer Gruppe mit einer Affinität für Kohlenstoffnanofasern, wobei das thermoplastische Harz ausgewählt ist aus einem Polyolefinharz, einem Polystyrolharz, einem Polyvinylchloridharz, einem Polyamidharz, einem Polyacrylatharz, einem Polyesterharz und einem Polycarbonatharz; und
(d) Einmischen von Kohlenstoffnanofasern in das Gemisch des thermoplastischen Harzes und des Elastomers bei 100°C oder weniger und bei Temperaturen, geringer als die Vermischungstemperatur im Schritt (c), und Dispergieren der Kohlenstoffnanofasern durch Anwenden einer Scherkraft.

3. Herstellungsverfahren für eine thermoplastische Harzzusammensetzung, wie in Anspruch 1 oder 2 definiert,
wobei die Kohlenstoffnanofasern einen durchschnittlichen Durchmesser von 0,5 bis 500 nm haben.

4. Herstellungsverfahren für eine thermoplastische Harzzusammensetzung, wie in irgendeinem der Ansprüche 1 bis 3 definiert,
wobei eine Netzwerkkomponente des Elastomers in einer nicht vernetzten Form eine Spin-Spin-Relaxationszeit (T2n), gemessen bei 30°C mit dem HahnEchoverfahren unter einer Bedingung eines observierten Nukleus ¹H und mit Hilfe einer Puls-Kernmagnetresonanz (NMR)-Technik, von 100 bis 3.000 Mikrosekunden hat.

## Revendications

1. Procédé de production d'une composition de résine thermoplastique, le procédé comprenant :
(a) à une température de 0 à 50°C, mélanger des nanofibres de carbone dans un élastomère comprenant une liaison non saturée ou un groupe possédant une affinité avec les nanofibres de carbone, et disperser les nanofibres de carbone en appliquant une force de cisaillement pour obtenir un élastomère composite ; et
(b) mélanger l'élastomère composite et une résine thermoplastique, où la résine thermoplastique est sélectionnée parmi une résine de polyoléfine, une résine de polystyrène, une résine de polychlorure de vinyle, une résine de polyamide, une résine de polyacrylate, une résine de polyester et une résine de polycarbonate.

2. Procédé de production d'une composition de résine thermoplastique, le procédé comprenant :
(c) mélanger une résine thermoplastique et un élastomère comprenant une liaison non saturée ou un groupe possédant une affinité avec les nanofibres de carbone, où la résine thermoplastique est sélectionnée parmi une résine de polyoléfine, une résine de polystyrène, une résine de polychlorure de vinyle, une résine de polyamide, une résine de polyacrylate, une résine de polyester et une résine de polycarbonate ; et
(d) mélanger des nanofibres de carbone dans le mélange de la résine thermoplastique et de l'élastomère à 100°C ou moins et à des températures moins élevées que la température de mélange dans l'étape (c), et disperser les nanofibres de carbone en appliquant une force de cisaillement.

3. Procédé de production d'une composition de résine thermoplastique comme défini dans la revendication 1 ou 2,
où les nanofibres de carbone ont un diamètre moyen de 0,5 à 500 nm.

4. Procédé de production d'une composition de résine thermoplastique comme défini dans une quelconque des revendications 1 à 3,
où une composante de réseau de l'élastomère dans une forme non réticulée possède un temps de relaxation spin-spin (T2n), mesuré à 30°C par le procédé d'écho de Hahn sous une condition de noyau d'observation ¹H au moyen d'une technique de résonance magnétique nucléaire (RMN) pulsée de 100 à 3.000 microsecondes.
